# EUROPEAN PATENT SPECIFICATION

(11) **EP 2 130 051 B1**
(45) Date of publication and mention of the grant of the patent: **21.07.2010**
(21) Application number: 08734787.8
(22) Date of filing: 27.03.2008
(51) Int. Cl.: G01P 5/10, G01P 13/00

(54) **WIND SPEED AND DIRECTION MEASURING APPARATUS**
WINDGESCHWINDIGKEITS- UND -RICHTUNGSMESSGERÄT
APPAREIL DE MESURE DE LA VITESSE ET DE LA DIRECTION DU VENT

(30) Priority: 28.03.2007 EP 07006339; 04.06.2007 EP 07010959
(43) Date of publication of application: 09.12.2009
(73) Proprietor: IRDAM Institut de Recherches et Développements Aérologiques Marketing SA, 1401 Yverdon-les-Bains (CH)
(72) Inventor: PERAUDIN, Michel, CH-1202 Geneva (CH)
(74) Representative: Kügele, Bernhard
(86) International application number: PCT/EP2008/002389
(87) International publication number: WO 2008/116644

(56) References cited:
- EP-A- 0 073 858
- JP-A- 4 295 768
- US-A- 4 905 513

## Description

### Field of Invention

The present invention relates to a wind speed and direction measuring device including a wind-exposed sensor, producing electrical signals depending on the speed and direction of the wind, and an electronic calculation unit adapted to calculate the speed and the direction of the wind on the basis of said signals, said wind exposed sensor being supported by a base, having a first main orientation, and being covered by a cover having a second main orientation, said cover being generally supported by said base, wherein a plurality of support elements support said cover on said base around said wind-exposed sensor, extending from said base to said cover.

### Prior Art

Measuring devices for the speed and the direction of the wind are known e. g. from US patent 4,905,513 in which a device is described which comprises a heated ceramic cylinder, around which a plurality such as eight temperature sensors are arranged, which are exposed to the wind.

The outer surface of the ceramic cylinder is cooled by the wind, and the cooling effect is different on each of the temperature sensors, so that the direction and also the speed of the wind can be calculated on the basis of e.g. the most cooled temperature sensor and its two, left and right, neighbors.

Other types of known wind speed and direction measuring devices comprise one, two or more heated wires, which are arranged in perpendicular direction to each other, and which are differently cooled by the wind, whereby the difference of the cooling effect of the different wires gives an indication of the direction of the wind and the total cooling effect gives an indication of the speed of the wind.

Other types of electronic wind speed and direction measurement devices are known, without referring here in detail, as the nature of the signal production and the physical effects to be measured are not the subject of the present invention.

The subject of the present invention rather concerns an improvement of the fluid-dynamic properties of a wind speed and direction measuring device of a type such as described above, or more generally of y type, where the wind impinges on the sensors in a not entirely free manner.

Traditionally, the temperature sensors are arranged in a manner open to the wind, on top of or next to a housing, which includes the electronic portions of the apparatus, whereas the portion of the housing closest to the sensor typically forms the base for the sensors.

For reasons of protection against rain, dirt, mechanical impact or the like, the sensor is protected by a cover, and the cover is typically supported by a number of bar-like supporting elements on the base. An example of such a device is shown in JP 04 295 768.

Naturally, the bar-like support elements surround the sensors, and at least one of them is in the way of the wind, so as to create a disturbance or at least a difference in the cooling effect, depending on the angular position of said bar with respect to the orientation of the wind.

These effects are predictable, and their influence may thus be compensated through proper calculation means.

However, the compensation algorithms are depending on the geometry of the system and need to be adapted each time that a modification is made to the geometrical shape of the base, the cover, the ceramic cylinder, the support bars and the like, which is extremely cumbersome.

### Object and Summary of the Invention

It is therefore the purpose and object of the invention to eliminate the necessity of adapting the compensation algorithm at a modification of the geometry of the wind-exposed mechanical components of a wind speed and direction measuring apparatus.

This object is achieved with a particular modification of the support structure including said support elements which carry the cover on the base, wherein said support elements are arranged between said base and said cover in a direction different from perpendicular between base and cover, preferably in inclined manner.

According to an embodiment of the invention, the wind speed and direction measuring device has a wind-exposed sensor which comprises a cylinder which is heated to a temperature above environmental temperature, and temperature sensors are disposed around the periphery of said cylinder, whereas the wind selectively cools at least some of said temperature sensors around said cylinder in a manner depending on the speed and direction of the wind.

In this embodiment, said base and said cover are generally horizontal, and said support elements are arranged at an angle different from vertical between base and cover.

It has been tested, that satisfactory results may be obtained when said angle between the orientation of said support elements and said base is between 30° and 60°.

In a preferred embodiment, the angle between the support elements and the base is approximately 45°.

In the wind speed and direction measuring apparatus said support elements between said base and said cover may be bars which are helicoidally wound within a cylindrical surface extending between congruent outer edges of said base and said cover.

These bars may have a rectangular or square cross section.

The totality of support elements may be produced from a hollow cylinder into which inclined slots, parallel to each other, have been cut all around its periphery.

### Brief Description of the Drawings

Fig. 1 is a cross section of the prior art wind meter of Fig.2.
Fig. 2 is a perspective view of the prior art wind meter of Fig. 1.
Figs. 3a and 3b are a front view and a section along III-III of Fig. 3a, of a prior art wind meter including a protective cover and its support elements.
Figs. 4a and 4b are wind channel simulations of a geometry according to Fig.3.
Figs. 5a and 5b are two diagrams which show the temperature signals of all temperature sensors as they are, one after the other, arranged exactly in the direction of the wind, Fig. 5a for a wind meter with support bars and Fig. 5b without support bars.
Fig. 6 is a schematic view of a wind meter according to the present invention.
Figs. 7a and 7b illustrate two theoretical situations of a wind speed meter according to the invention.

### Detailed description of the invention

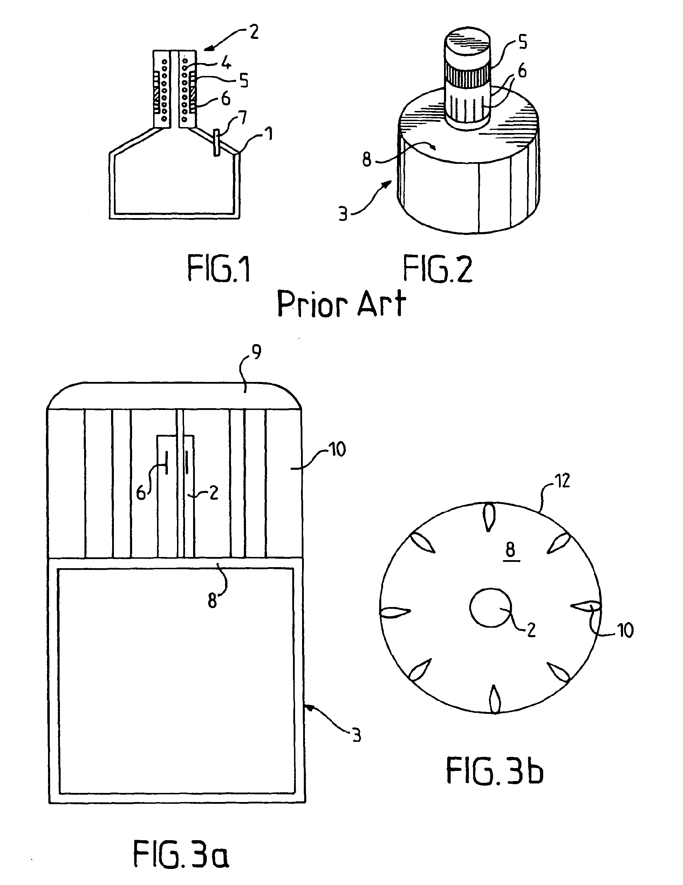

Turning now to Fig. 1, a traditional electronic wind meter comprises a housing for its electronic components, such as calculation means etc. as well as for its power supply.

The measuring unit comprises a ceramic cylinder 2, within which is provided a heating coil 4, by means of which the outer surface of the ceramic cylinder is heated to a temperature well above environmental temperature, such as e.g. 100°C, if the wind meter is used in moderate climate.

Should the wind meter be use is extreme climates like polar regions or desert regions, the outside temperature of the ceramic cylinder may vary.

At the outer surface of the ceramic cylinder, and outside of the heating coil, temperature sensors 5 and 6 are arranged around the cylinder, such as to measure the surface temperature of the cylinder in the respective angular zones represented by the angular position of each temperature sensor.

Fig. 2 shows a similar wind meter in perspective view, where one may see the angular positioning of temperature sensors 6 around the cylinder.

Sensor 5, which is an integral band around the cylinder, has previously been proposed in order to measure and calculate the wind speed, whereas the individual sensors 6 were used to extract the wind direction from the values measured by three only of the typically eight sensors.

In this configuration, the wind meter was exposed to the wind, and the sensor which was angularly the closest oriented against the wind, was the most cooled, whereas the other sensors were less cooled according to their position.

The three sensors, comprising the most cooled, as well as its left and right neighbors, were used to calculate the direction of the wind, and the signals of all sensors together were used to calculate the speed of the wind.

Wind meters of this type were currently used for a variety of applications, where it was important to know the speed and the direction of the wind.

In most of these application it quickly turned out, that the ceramic cylinder of the meter needed protection against rain, dirt, mechanical impact and so forth, so that it was necessary to provide a cover over the top of the cylinder, but for reasons of mechanical stability, this cover could not be simply anchored on top of the cylinder, but needed to be supported by support bars which extended from the base upwards to the cover, as illustrated in Fig. 3a. In this figure one can see the housing 3, on top of which is positioned the ceramic cylinder 2 with its temperature sensors 6.

Above the ceramic cylinder 2 is arranged a protective cover 9, which is supported by support bars 10, the cross section of which may better be seen in Fig. 3b as having a fluid-dynamic profile. The bars 10 are arranged as far outside as possible from the ceramic cylinder 2 which is positioned at the center of the circular base 8, whereby the upper and lower ends of the bars are attached to outer edges 12 of the base and the cover respectively.

At the beginning, these support elements were round bars, but it had been understood, that round bars disturb the laminar flow of the wind, and create substantial turbulences.

In an attempt to resolve this problem, the bars have been made in a fluid-dynamic profile shape, which reduced the effects of the nevertheless created turbulences.

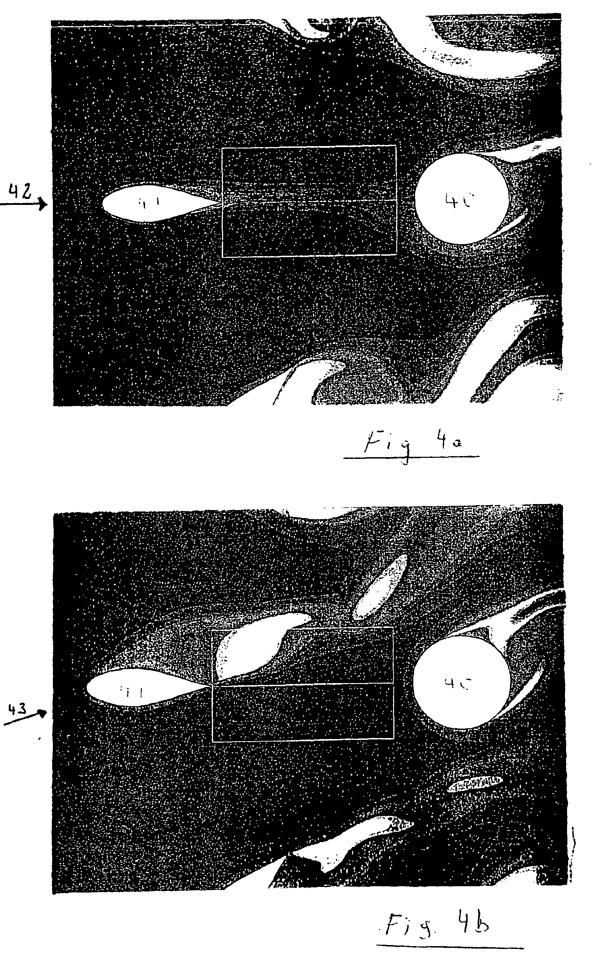

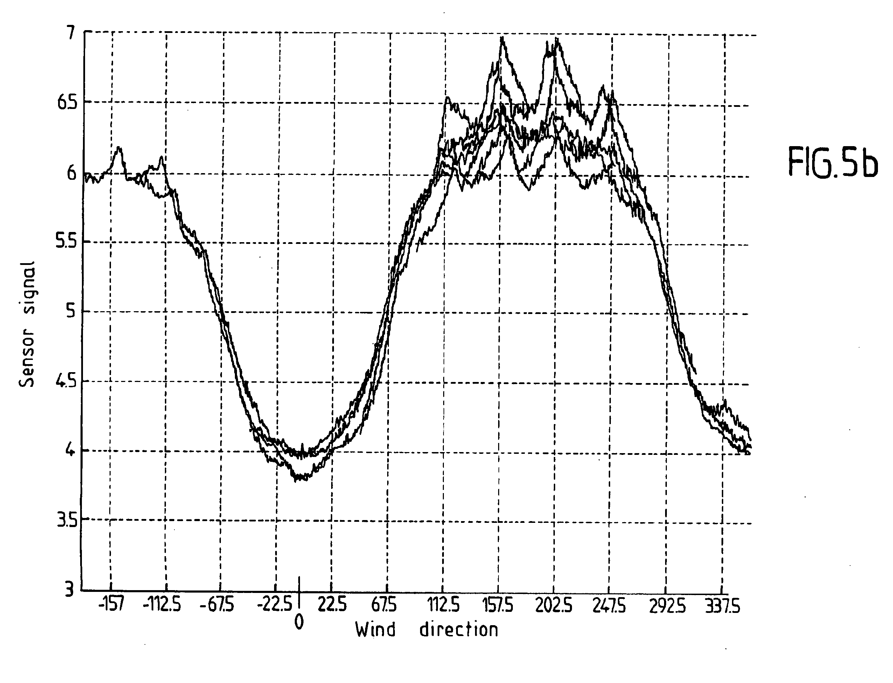

Figs. 4 a and 4b show two simulations of the wind effects of the discussed geometry in a wind channel, whereby Fig. 4a shows the situation of a wind meter according to Figs. 1 or 2, whereas Fig. 5b shows the situation in case of a wind meter according to Fig. 3, including the fluid-dynamic support bars.

In Fig. 4a one can see the circle 40, which represents the ceramic cylinder, and the profiled support bar 41.

In Fig. 4a, the wind blows from direction 42, i.e. exactly aligned with bar 41 and cylinder 40, and one can see the turbulences created in the wind profile immediately behind bar 41.

In Fig. 4b, the direction of the wind comes from direction 43, and one can see the turbulences following the same direction behind the bar 43, so as to leave cylinder 40 undisturbed.

Now, the inventors were confronted with the phenomenon, that the cooling effect of the wind was stronger if a turbulent wind impinged on the surface of the cylinder that was the case if the wind had a laminar flow pattern, which means that in the case of the Fig. 4a, the cylinder area facing the wind was subjected to a stronger cooling effect, than the cylinder area facing the wind in Fig. 5b, both for the same wind speed.

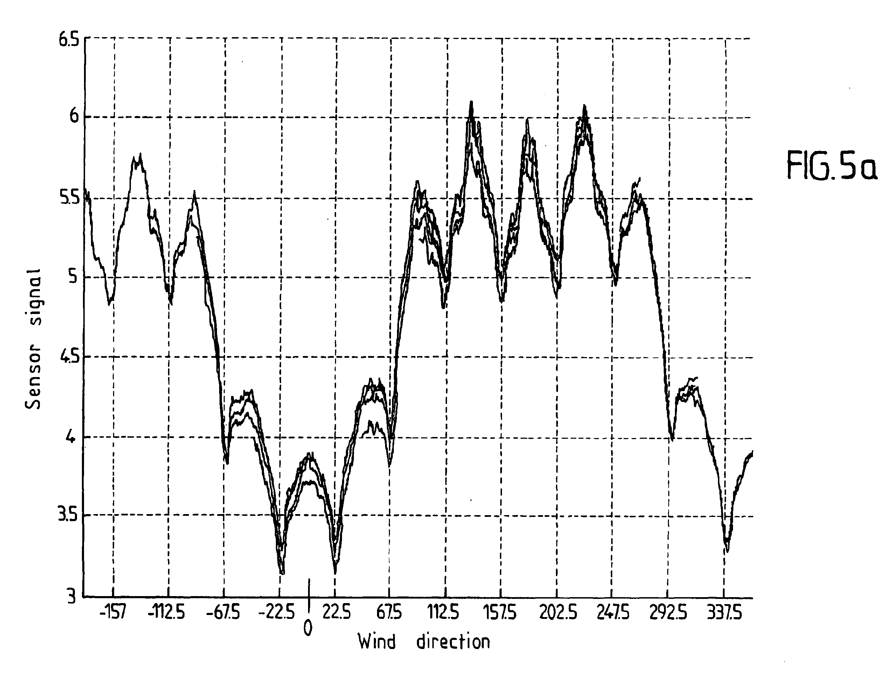

Fig. 5a is a diagram shows, superposed for the various sensors the signal of a particular sensor, when the wind turns all around, ie. from -180° to + 360°.

One can see, that each sensor, once the wind turns from -22.5° to + 22.5° around the particular sensor's zero position in which it exactly faces the wind, the measured electrical values of the particular temperature sensor, goes from about 3,2 to 3,8 (in the zero position) and back to 3,2.

All other sensors suffer the same variation during the same variation of the wind direction.

Fig. 5b represents the same measurements as Fig. 5a, but with a wind meter which does not have support bars around the ceramic cylinder.

It is obvious, that the curves of the individual sensors, vary very smoothly with the variation of the wind direction.

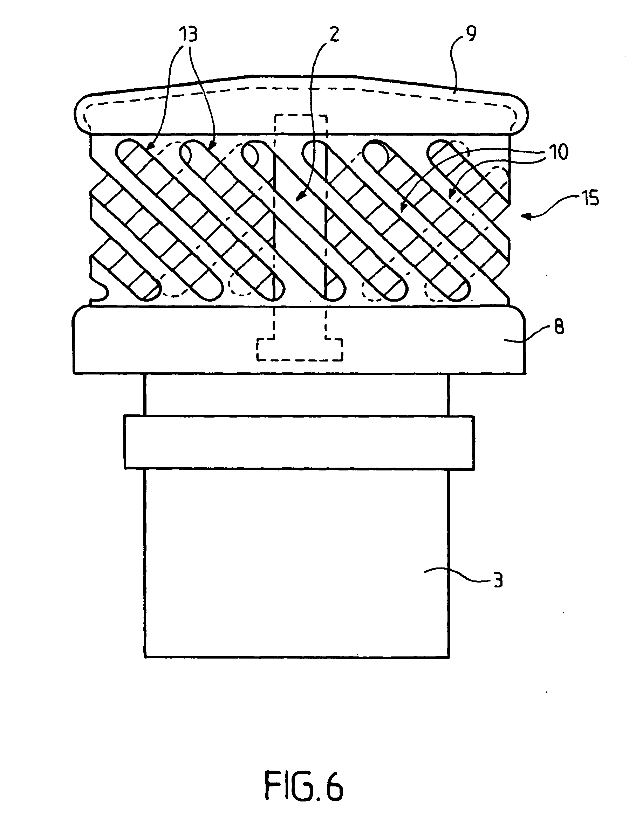

Turning now to Fig. 6, there is a housing 3 including all electronic elements of the wind meter, and this housing is closed on it's upper side with a plate that 8 that forms the base for a ceramic cylinder, similar to the ceramic cylinder of Fig. 3.

Around the ceramic cylinder 2 and in essentially maximum distance from the latter, is provided a structure 15, which serves as mechanical support of the cover 9 on the base 8.

This support structure 15, is comprised of bar-like support elements 10, which are inclined with respect to the direction of the ceramic cylinder 2, or with respect to the base 8 and the cover 9.

According to the embodiment shown in Fig. 6, the support structure 15 is comprised of a hollow cylinder, into which longitudinal slots have been cut, in parallel relationship to each other, and the bars 10 constitute the remainders of the cylinder between each two parallel slots.

The support structure or support cylinder 15 is fastened to the base and to the cover e.g. by welding.

The slots in the support cylinder 15 allow the wind to enter into the inside of it, and cool the ceramic cylinder 2 in the same way as in the prior art, with the only exception, that the cooling effect is largely independent of the angular direction from which the wind comes, because the fluid-dynamic flow pattern of the air on the way from the support bars 10 to the ceramic cylinder 2 is identical in any direction, the only thing that changes with the direction is the height on the cylinder 2 at which the cooling air impinges on the cylinder 2, but this does not change the measured values of the temperature sensors.

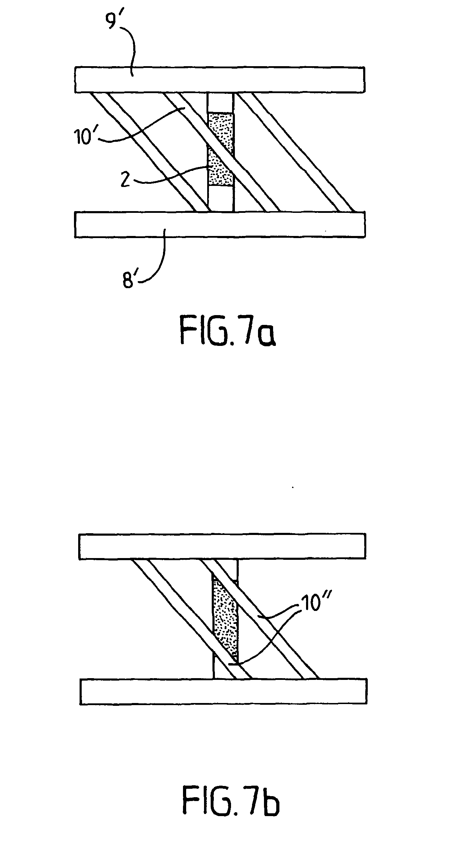

Turning now to Fig. 7, it will be explained, that the effect of the wind direction on the cooling of the sensor in an arrangement according to the present invention is minimized, and may even be completely eliminated.

Typically, in the prior art, comprise a sensor, which is protected by an open structure having an upper 9' and a lower 8' support, as was already discussed in relation with Figs. 3a and 3b.

The problems encountered with this type of wind speed meter had their origin in the fact, that that the sensitive surface of the sensor, was either entirely within, entirely outside of or partially within the trailing flow behind a support bar.

The particularity of the present invention was to find a means which obtained a geometry that provided a kind of averaged flow pattern behind the support bars, that was independent of the orientation of the wind.

Thus, at the surface of the sensor one obtains an "average" perturbation of the flow, which is independent of the direction of the wind. In a prototype, the support bars were wound around the sensor, so that the surface of the sensor on which impinged this "averaged" flow of air was invariable with any change of orientation and responded only in its general orientation to the direction of the wind, but retained the same pattern.

Figs. 7a and 7b show two different angular orientations under which the wind may "see" the sensor 2. In Fig. 7a, a support bar 10' crosses the sensor in the center, and in Fig. 7b two support bars10" cross the sensor at extreme ends.

These two extreme possibilities practically obtain the same cooling effect on the sensor, because one may consider, that in both cases, the same amount of sensor surface is hidden by the support bars, so that the same total ratio of disturbed flow to undisturbed flow impinges onto the sensor. In the prior art, one may easily imagine, the same orientation as in Figs. 7a and 7b would produce situation where the sensor is fully covered, respectively fully free of the shade of the support bars.

Similar effects as those obtained with inclined bars may be obtained e.g. with corrugated sheet or mesh, whereas the orientation of the individual elements are inclined to the general axis of the sensor.

The invention has been described by way of an example, it should be understood, however, that the scope of the invention goes beyond this example and includes any type of inclined support structure, capable of rendering the fluid-dynamic flow pattern of the wind between the support bars and the ceramic cylinder, or any other type of wind sensor, independent of the direction of the wind.

## Claims

1. A wind speed and direction measuring device including a wind-exposed sensor (2), producing electrical signals depending on the speed and direction of the wind (42, 43), and an electronic calculation unit adapted to calculate the speed and the direction of the wind on the basis of said signals, said wind exposed sensor (2) being supported by a base (8), and being covered by a cover (9) said cover being generally supported by said base (8), wherein a plurality of support elements (10) support said cover (9) on said base (8) around said wind-exposed sensor (2), said support elements (10) extending from said base to said cover,
**characterized in that**
said support elements (10) are arranged between said base (8) and said cover (9) in a direction different from perpendicular between base (8) and cover (9), preferably in inclined manner.

2. The wind speed and direction measuring device of claim 1, **characterized in that** said wind-exposed sensor (2) comprises a cylinder (2) which is heated to a temperature above environmental temperature, and temperature sensors (6) are disposed around the periphery of said cylinder, whereas the wind selectively cools at least some of said temperature sensors (6) around said cylinder (2) in a manner depending on the speed and direction of the wind.

3. The wind speed and direction measuring device according to claim 2, **characterized in that** said base (8) and said cover (9) are generally horizontal, and **in that** said support elements (10) are arranged at an angle different from vertical between base and cover.

4. The wind speed and direction measuring apparatus according to claim 3, **characterized in that** said angle between the orientation of said support elements (10) and said base (8) being chosen as small as possible while providing stability of the cover (9).

5. The wind speed and direction measuring apparatus according to claim 4, **characterized in that** said said angle between the orientation of said support elements (10) and said base (8) is between 30° and 60°.

6. The wind speed and direction measuring apparatus according to claim 5, **characterized in that** said said angle between the orientation of said support elements (10) and said base (8) is approximately 45°.

7. The wind speed and direction measuring apparatus according to anyone of the preceding claims, **characterized in that** said support elements (10) between said base (8) and said cover (9) are bars which are helicoidally wound within a cylindrical surface extending between outer edges (15) of said base and said cover.

8. The wind speed and direction measuring apparatus according to claim 7, **characterized in that** said support elements (10) have a rectangular cross section.

9. The wind speed and direction measuring apparatus according to claim 7, **characterized in that** said support elements (10) have a square cross section.

10. The wind speed and direction measuring apparatus according to anyone of the preceding claims, **characterized in that** said support elements (10) are arranged to form a support structure (15) which forms a hollow cylinder, the support elements (10) being formed between slots (13) cut into said hollow cylinder (15).

## Patentansprüche

1. Eine Messvorrichtung für Windgeschwindigkeit und -richtung, die einen dem Wind ausgesetzten Sensor (2), der elektrische Signale erzeugt, die von der Geschwindigkeit und der Richtung des Windes (42, 43) abhängen, und eine elektronische Berechnungseinheit einschließt, die zur Berechnung der Geschwindigkeit und der Richtung des Windes basierend auf den Signalen angepasst ist, der dem Wind ausgesetzte Sensor (2) von einer Basis (8) getragen und von einer Abdeckung (9) abgedeckt wird, die Abdeckung im Allgemeinen von der Basis (8) getragen wird, wobei eine Vielzahl von Trägerelementen (10) die Abdeckung (9) auf der Basis (8) um den dem Wind ausgesetzten Sensor (2) herum trägt, die Trägerelemente (10) sich von der Basis zu der Abdeckung erstrecken,
**dadurch gekennzeichnet, dass**
die Trägerelemente (10) zwischen der Basis (8) und der Abdeckung (9) in einer anderen Richtung als senkrecht zwischen der Basis (8) und der Abdeckung (9), vorzugsweise in einer schrägen Art und Weise, angeordnet sind.

2. Die Messvorrichtung für Windgeschwindigkeit und -richtung nach Anspruch 1, **dadurch gekennzeichnet, dass** der dem Wind ausgesetzte Sensor (2) einen Zylinder (2) umfasst, der auf eine Temperatur über Umgebungstemperatur erwärmt wird, und dass Temperatursensoren (6) um den Umfang des Zylinders herum angeordnet sind, während der Wind selektiv mindestens einige der Temperatursensoren (6) um den Zylinder (2) herum in einer Art und Weise abkühlt, die von der Geschwindigkeit und der Richtung des Windes abhängt.

3. Die Messvorrichtung für Windgeschwindigkeit und -richtung nach Anspruch 2, **dadurch gekennzeichnet, dass** die Basis (8) und die Abdeckung (9) im Allgemeinen waagrecht sind, und dass die Trägerelemente (10) in einem anderen Winkel als senkrecht zwischen der Basis und der Abdeckung angeordnet sind.

4. Die Messvorrichtung für Windgeschwindigkeit und -richtung nach Anspruch 3, **dadurch gekennzeichnet, dass** der Winkel zwischen der Ausrichtung der Trägerelemente (10) und der Basis (8) möglichst klein gewählt wird, während sie für die Stabilität der Abdeckung (9) sorgen.

5. Die Messvorrichtung für Windgeschwindigkeit und -richtung nach Anspruch 4, **dadurch gekennzeichnet, dass** der Winkel zwischen der Ausrichtung der Trägerelemente (10) und der Basis (8) zwischen 30° und 60° beträgt.

6. Die Messvorrichtung für Windgeschwindigkeit und -richtung nach Anspruch 5, **dadurch gekennzeichnet, dass** der Winkel zwischen der Ausrichtung der Trägerelemente (10) und der Basis (8) etwa 45° beträgt.

7. Die Messvorrichtung für Windgeschwindigkeit und -richtung nach einem der vorstehenden Ansprüche, **dadurch gekennzeichnet, dass** die Trägerelemente (10) zwischen der Basis (8) und der Abdeckung (9) Stäbe sind, die innerhalb einer zylindrischen Fläche schraubenlinienförmig gewickelt sind, die sich zwischen den Außenkanten (15) der Basis und der Abdeckung erstreckt.

8. Die Messvorrichtung für Windgeschwindigkeit und -richtung nach Anspruch 7, **dadurch gekennzeichnet, dass** die Trägerelemente (10) einen rechtwinkligen Querschnitt aufweisen.

9. Die Messvorrichtung für Windgeschwindigkeit und -richtung nach Anspruch 7, **dadurch gekennzeichnet, dass** die Trägerelemente (10) einen quadratischen Querschnitt aufweisen.

10. Die Messvorrichtung für Windgeschwindigkeit und -richtung nach einem der vorstehenden Ansprüche, **dadurch gekennzeichnet, dass** die Trägerelemente (10) angeordnet sind, um eine Trägerstruktur (15) zu bilden, die einen Hohlzylinder bildet, wobei die Trägerelemente (10) zwischen Schlitzen (13) ausgebildet sind, die in den Hohlzylinder (15) geschnitten sind.

## Revendications

1. Dispositif de mesure de la vitesse et de la direction du vent incluant un capteur exposé au vent (2), produisant des signaux électriques en fonction de la vitesse et de la direction du vent (42, 43), et une unité de calcul électronique adaptée pour calculer la vitesse et de la direction du vent sur la base desdits signaux, ledit capteur exposé au vent (2) étant supporté par une base (8), et étant recouvert par un couvercle (9), ledit couvercle étant de façon générale supporté par ladite base (8), dans lequel une pluralité d'éléments de support (10) supportent ledit couvercle (9) sur ladite base (8) autour dudit capteur exposé au vent (2), lesdits éléments de support (10) s'étendant de ladite base jusqu'audit couvercle,
**caractérisé en ce que**
lesdits éléments de support (10) sont agencés entre ladite base (8) et ledit couvercle (9) dans un sens différent de la perpendiculaire entre la base (8) et le couvercle (9), préférablement d'une manière inclinée.

2. Dispositif de mesure de la vitesse et de la direction du vent selon la revendication 1, **caractérisé en ce que** ledit capteur exposé au vent (2) comprend un cylindre (2) qui est chauffé à une température au-dessus de la température environnementale, et des capteurs de température (6) sont disposés autour de la périphérie dudit cylindre, considérant que le vent refroidit sélectivement au moins certains desdits capteurs de température (6) autour dudit cylindre (2) d'une manière dépendant de la vitesse et de la direction du vent.

3. Dispositif de mesure de la vitesse et de la direction du vent selon la revendication 2, **caractérisé en ce que** ladite base (8) et ledit couvercle (9) sont de façon générale horizontaux, et **en ce que** lesdits éléments de support (10) sont agencés selon un angle différent de la verticale entre la base et le couvercle.

4. Dispositif de mesure de la vitesse et de la direction du vent selon la revendication 3, **caractérisé en ce que** ledit angle entre l'orientation desdits éléments de support (10) et de ladite base (8) étant choisi aussi petit que possible tout en offrant une stabilité du couvercle (9).

5. Dispositif de mesure de la vitesse et de la direction du vent selon la revendication 4, **caractérisé en ce que** ledit angle entre l'orientation desdits éléments de support (10) et de ladite base (8) est entre 30° et 60°.

6. Dispositif de mesure de la vitesse et de la direction du vent selon la revendication 5, **caractérisé en ce que** ledit angle entre l'orientation desdits éléments de support (10) et de ladite base (8) est approximativement 45°.

7. Dispositif de mesure de la vitesse et de la direction du vent selon l'une quelconque des revendications précédentes, **caractérisé en ce que** lesdits éléments de support (10) entre ladite base (8) et ledit couvercle (9) sont des barres qui sont enroulées hélicoïdalement au sein d'une surface cylindrique s'étendant entre des bords extérieurs (15) de ladite base et dudit couvercle.

8. Dispositif de mesure de la vitesse et de la direction du vent selon la revendication 7, **caractérisé en ce que** lesdits éléments de support (10) ont une coupe transversale rectangulaire.

9. Dispositif de mesure de la vitesse et de la direction du vent selon la revendication 7, **caractérisé en ce que** lesdits éléments de support (10) ont une coupe transversale carrée.

10. Dispositif de mesure de la vitesse et de la direction du vent selon l'une quelconque des revendications précédentes, **caractérisé en ce que** lesdits éléments de support (10) sont agencés de façon à former une structure de support (15) qui forme un cylindre creux, les éléments de support (10) étant formés entre des fentes (13) découpées dans ledit cylindre creux (15).
